# EUROPEAN PATENT APPLICATION

(11) **EP 1 632 793 A2**
(43) Date of publication of application: **08.03.2006**
(21) Application number: 05019118.8
(22) Date of filing: 02.09.2005
(51) Int. Cl.: G01V 3/10

(54) **Magnetic object detection device**

(30) Priority: 06.09.2004 JP 2004258837
(71) Applicant: Lintec Corporation, Tokyo (JP); CDN Corporation, Miyazaki-shi Miyazaki-ken (JP)
(72) Inventor: Sakashita, Hitoshi, Misato-shi, Saitama-ken (JP); Ooishi, Hiroshi, Itabashi-ku Tokyo (JP); Ishihara, Kunihiko, Saitama-shi, Saitama-ken (JP); Moroya, Tetsuo, Saitama-shi, Saitama-ken (JP); Iwakata, Yuichi, Warabi-shi, Saitama-ken (JP); Matsui, Kunihiko, Tousyoken-gun, Miyazaki-ken (JP)
(74) Representative: Grünecker, Kinkeldey, Stockmair & Schwanhäusser Anwaltssozietät

(57) **Abstract**

A compact magnetic object detection device (1) with high degree of freedom for installation can be provided. The magnetic object detection device includes magnetic field generating mechanism (3) for radiating an alternating magnetic field in a vicinity space; one or a plurality of loop antennas (4A,4B) which convert the magnetic field in the vicinity space into an electric signal; determining mechanism for analyzing an existence of magnetostriction and determining an existence of a magnetic object, the magnetostriction generated by the magnetic object existing in the vicinity space based on the electric signal of each of the loop antennas. An installation member, attached with at least the magnetic field generating mechanism and each of the loop antennas, has a pole shape.

## Description

### BACKGROUND OF THE INVENTION

### 1. Field of the Invention

The present invention relates to a magnetic object detection device which can be applied to a detection tag detecting gate for shoplifting prevention, for example.

### 2. Description of the Related Art

For example, in a shoplifting prevention device, when a purchaser of a product attached with a detection tag generally passes through between two detection tag detecting gates, the detection tag detecting gates determine whether or not a charge payment is already made based on information received from the detection tag. After the payment, the detection tag is put in a noncommunicable state so that the detection tag detecting gates can determine whether or not the payment is already made.

In this case, there is an example using a magnetic field in communication between a detection tag and a detection tag detecting gate (see Japanese Patent Application Laid-Open No. 6-342065). Conventionally, in order to detect the detection tag in accordance with a communication system (commonly referred to as EM system) utilizing a magnetic field, two flat plate-shaped detection tag detecting gates are installed in parallel at approximately one meter distance from each other. Each of the flat plate-shaped gates has a width of approximately 70 cm and a height of approximately 150 cm.

A detection tag detecting gate is generally installed at an entrance/exit of a store and a building. However, installation of two detection tag detecting gates having the above-mentioned size suffers from following disadvantages. At the time of entrance, purchasers cannot see the inside of the store and the building well so that their desires for purchase may be affected. Further, ordinary purchasers may feel uncomfortable at the time of leaving.

In addition, since the above-mentioned two detection tag detecting gates have a small installation space therebetween, it is difficult for a physically handicapped person using a wheelchair to pass through between the gates.

Further, a large space is needed for installation of the detection tag detecting gate. Considering detection accuracy of the gate, a metallic shelf, a fitting or the like cannot be provided around the detection tag detecting gate.

In view of the foregoing, an object of the invention is to provide a compact magnetic object detection device with high degree of freedom for installation.

### SUMMARY OF THE INVENTION

To solve the problems, the magnetic object detection device of the first invention includes magnetic field generating means for radiating an alternating magnetic field in a vicinity space; one or a plurality of loop antennas which convert the magnetic field in the vicinity space into an electric signal; determining means for analyzing an existence of magnetostriction and determining an existence of a magnetic object, the magnetostriction generated by the magnetic object existing in the vicinity space based on the electric signal of each of the loop antennas, wherein an installation member, attached with at least the magnetic field generating means and each of the loop antennas, has a pole shape.

In the magnetic object detection device set forth above, the magnetic field generating means radiates the alternating magnetic field by flowing a current to a magnetic field generating coil.

In the magnetic object detection device set forth above, a coil surface of the magnetic field generating coil and an antenna surface of each of the loop antennas are disposed on the same plane.

In the magnetic object detection device set forth above, the coil surface of the magnetic field generating coil is crossed to the antenna surface of each of the loop antennas and the crossing straight line is parallel with a longitudinal axial direction of the installation member.

In the magnetic object detection device set forth above, the magnetic field generating coil is wound around a coil winding cylinder.

In the magnetic object detection device set forth above, the magnetic field generating coil is wound parallel to an axial direction of the coil winding cylinder at a side surface of the coil winding cylinder.

In the magnetic object detection device set forth above, the magnetic field generating coil has a portion spirally wound to a side surface of the coil winding cylinder.

In the magnetic object detection device set forth above, each of the loop antennas is attached such that a shape of the antenna surface fits a shape of a side surface of an attaching cylinder.

In the magnetic obj ect detection device set forth above, the magnetic field generating means radiates the alternating magnetic field by rotating a permanent magnet.

In the magnetic obj ect detection device set forth above, the plurality of loop antennas are provided, the determining means obtains a difference signal of an electric signal from the loop antennas, and determines the existence of the magnetic object based on the difference signal.

In the magnetic object detection device set forth above, the magnetic object determined by the determining means is a magnetic tag.

According to the present invention, an installation member, attached with at least the magnetic field generating means and each of the loop antenna, has a pole shape. Therefore, a compact magnetic object detection device with high degree of freedom for installation can be provided.

### BRIEF DESCRIPTION OF THE DRAWINGS

Fig. 1 is a schematic view showing the constitution of a detection tag detecting gate device according to a first embodiment;
Fig. 2 is a block diagram showing an example of two loop antenna connections according to the first embodiment;
Fig. 3 is a schematic view showing the constitution of a modification according to the first embodiment;
Fig. 4 is a schematic view showing the constitution of a detection tag detecting gate device according to a second embodiment;
Fig. 5 is a schematic plan view showing a relation between a coil surface of a magnetic field generating coil and an antenna surface of a loop antenna according to the second embodiment;
Fig. 6 is a schematic plan view showing a relation between the coil surface of the magnetic field generating coil and the antenna surface of the loop antenna according to a modification of the second embodiment;
Fig. 7 is a schematic view showing a magnetic field generating coil of a detection tag detecting gate device according to a third embodiment;
Fig. 8 is a schematic view showing a magnetic field generating coil of a detection tag detecting gate device according to a fourth embodiment;
Fig. 9 is a schematic view showing the magnetic field generating coil according to a modification of the fourth embodiment;
Fig. 10 is a schematic view showing an essential configuration of a detection tag detecting gate device according to a fifth embodiment;
Fig. 11 is a schematic view showing an essential configuration of a detection tag detecting gate device according to a sixth embodiment; and
Fig. 12 is a schematic view showing an essential configuration of a detection tag detecting gate device according to a seventh embodiment.

### DESCRIPTION OF THE PREFERRED EMBODIMENT

### (A) A first embodiment

Referring to the accompanying drawings, a first embodiment in which a magnetic object detection device according to the present invention is applied to a detection tag detecting gate device will be described in detail.

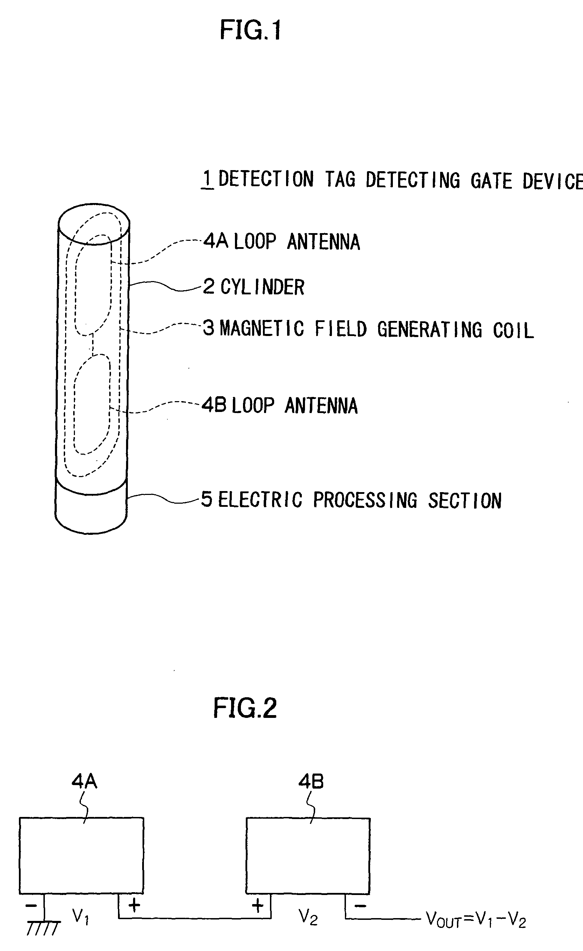

Fig. 1 is a schematic view of the detection tag detecting gate device according to the first embodiment.

In Fig. 1, a detection tag detecting gate device 1 according to the first embodiment includes a cylinder 2 composed of a circular or square cylinder. The cylinder 2 has a magnetic field generating coil 3 and two loop antennas 4A and 4B therein. The cylinder 2 also has an electric processing section 5 therebelow. It should be understood that a method of fixing the magnetic field generating coil 3 and the two loop antennas 4A and 4B into the cylinder 2 may be arbitrary without limitation.

The magnetic field generating coil 3 is wound in an oval (i.e., an arc having a radius of 65 mm at each of the upper and lower ends) form having a vertical direction of 1160 mm and a width direction (horizontal direction) of 130 mm, for example. An alternating magnetic field is generated by driving the electric processing section 5. The size of the cylinder 2 is selected in consideration of the size of the magnetic field generating coil 3.

The two loop antennas 4A and 4B have the antenna surfaces vertically disposed on the same plane to a coil surface of the magnetic field generating coil 3 and arranged inside the coil surface of the magnetic field generating coil 3. Each of the loop antennas 4A and 4B is wound by the same number in an oval (i.e., an arc having a radius of 45 mm at each of the upper and lower ends) form having a vertical direction of 440 mm and a width direction (horizontal direction) of 90 mm, for example.

Each of the loop antennas 4A and 4B may be individually connected to the electric processing section 5. As shown in Fig. 2, the loop antennas 4A and 4B may be connected to the electric processing section 5 in a state where the loop antenna 4A is cascade-connected to the loop antenna 4B.

Fig. 2 shows an example of a cascade connection when vertically divided two loop antennas 4A and 4B have the same windingdirection. In Fig. 2, both the first output connectors of the loop antennas 4A and 4B (although the first output connectors can take a positive or negative voltage, "+" is shown in the drawing) are connected. A second output connector ( "-" is shown in the drawing) of the loop antenna 4A is grounded. A second output connector of the loop antenna 4B is connected to the electric processing section 5.

In this case, assuming that induced voltages between output terminals of the loop antennas 4A and 4B are set to V1 and V2 respectively when a detection tag does not exist in the vicinity, a similar noise component is intruded in the induced voltages V1 and V2. As shown in Fig. 2, a differential voltage V1 - V2 input into the electric processing section 5 by the cascade connection is approximately 0 due to cancel of the noise component. When a detection tag exists in the vicinity of the loop antennas, the induced voltage of the loop antenna 4A varies from V1 to V1 + ΔV1. The induced voltage of the loop antenna 4B varies from V2 to V2 + ΔV2. The differential voltage input into the electric processing section 5 is approximately ΔV1 - ΔV2. Magnetostriction generated when the detection tag (e. g. , wire-shaped tag) which affects a magnetic field distribution exists is monitored from time variation of the different voltage ΔV1 - ΔV2 so that the detection tag can be distinguished.

In case of a device which individually connects the loop antennas 4A and 4B to the electric processing section 5, the electric processing section 5 obtains a differential voltage of induced voltages between both of the output terminals of the loop antennas 4A and 4B by using, for example, a built-in differential amplifier and the like.

Specifications and drawings of Patent Application Laid-Open No. 2003-199323 describe a method for detecting that the detection tag exists in the vicinity of the loop antennas based on a differential voltage of induced voltages between two loop antennas 4A and 4B.

The electric processing section 5 drives the magnetic field generating coil 3 to generate an alternating magnetic field and receives the above-mentioned differential voltage. The electric processing section 5 itself may determine whether or not the detection tag (e. g. , wire-shaped tag) which affects a magnetic field distribution exists in the vicinity based on the differential voltage. Further, the electric processing section 5 may convert the differential voltage to a digital signal and send the signal to an upper-level device.

In the first embodiment, both of the magnetic field generating coil 3 and the two loop antennas 4A and 4B are provided inside the cylinder 2. However, a sufficient detection distance can be practically expected. Inan example of the present embodiment, when 100AT (ampereturn) magnetic field is generated from the magnetic field generating coil 3, the detection distance of approximately 30 cm to 40 cm can be obtained combining with detection accuracy improved by differential constitution of the loop antennas 4A and 4B. Moreover, the detection distance is increased as the magnetic field generated from the magnetic field generating coil 3 is increased.

As has been described in accordance with the first embodiment of the invention, the detection tag detecting gate device can be formed in a pole shape. As a result, the detection tag detecting gate device can be compact, light weight, and inexpensive. This leads to increase a freedom degree of installation of the detection tag detecting gate device. Since formed in a pole-shaped, the detection tag detecting gate device is more attractive than that of a large area flat plate type. Even when a plurality of detection tag detecting gate devices are installed, it is easy to pass through the side thereof.

In this connection, detection tag detecting gate devices using other systems such as RF system and AM system have already been formed in a pole shape. However, EM system similar to the embodiment utilizes magnetostriction for detection so that it is necessary to generate a large magnetic field for detection. Therefore, none of the pole-shaped detection tag detecting gate device is provided with both a magnetic field generating coil and a loop antenna.

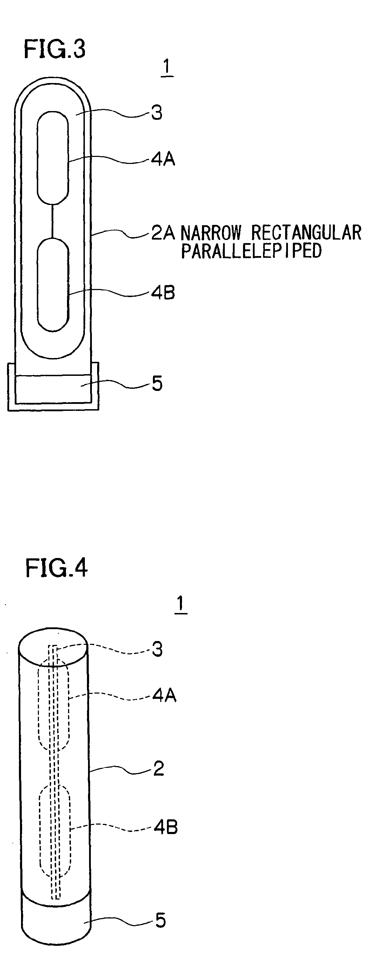

Fig. 1 shows the pole-shaped detection tag detecting gate device configured to provide the magnetic field generating coil 3 and the two loop antennas 4A and 4B inside the cylinder 2. However, as shown in Fig. 3, the pole-shaped detection tag detecting gate device may be formed in a pole shape having a rectangular cross section, with the magnetic field generating coil 3 and the two loop antennas 4A and 4B disposed over a rectangular parallelepiped 2A. The rectangular parallelepiped 2A whose width is considerably shorter than the length (e.g., not more than 1/8) is made of wood, for example. The entire cylinder 2 equipped with the magnetic field generating coil 3 and the two loop antennas 4A and 4B may be rotated at a constant speed by a motor and the like. In the specification , the word "rotate" includes "swing" and the like. In this case, the cylinder 2 may bring into contact with the electric processing section 5 by a slip ring and the like. In short, when a relative positioning of the magnetic field generating coil 3 and the two loop antennas 4A and 4B is identical to the first embodiment, an installation method of the magnetic field generating coil 3 and the two loop antennas 4A and 4B may be arbitrarily.

### (B) Second embodiment

Referring to the accompanying drawings, a second embodiment in which a magnetic object detection device according to the present invention is applied to a detection tag detecting gate device will be described in detail.

Fig. 4 is a schematic view of the detection tag detecting gate device according to the second embodiment, wherein the same or corresponding parts as those in Fig. 1 according to the first embodiment are denoted by the same reference symbols.

The detection tag detecting gate device 1 of the second embodiment has the same components as the first embodiment. However, the relation between the coil surface of the magnetic field generating coil 3 and the antenna surfaces of the loop antennas 4A and 4B is different from that of the first embodiment. In this case, the coil surface of the magnetic field generating coil 3 and the antenna surfaces of the loop antennas 4A and 4B are formed so as to cross each other.

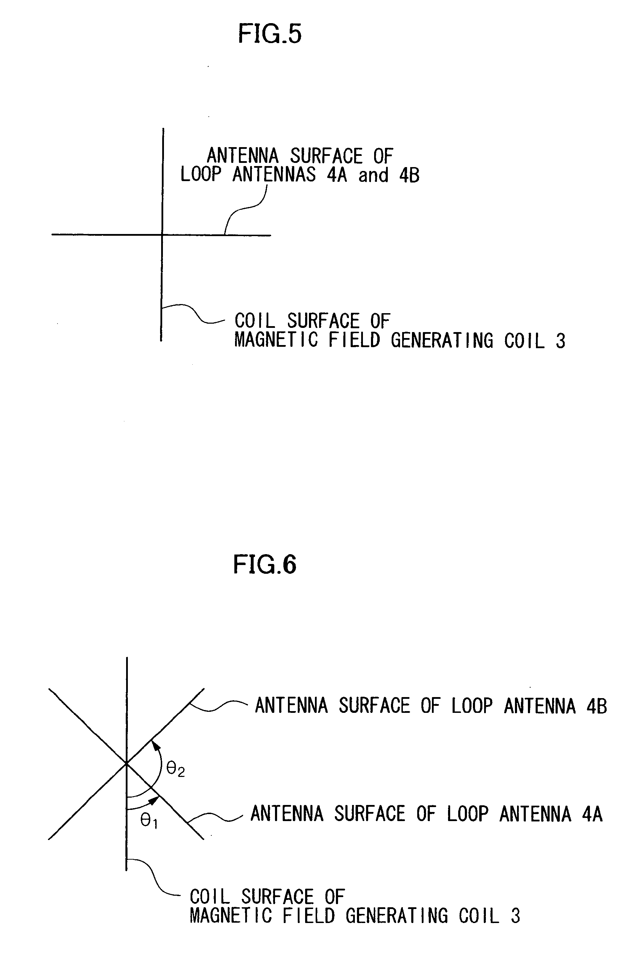

That is, in the second embodiment, as shown in a schematic plan view (a view seen from the above) in Fig. 5, the coil surface of the magnetic field generating coil 3 is crossed at right angles to the antenna surfaces of the loop antennas 4A and 4B. The crossing straight line is parallel with a longitudinal axial direction of an installation member. Such an orthogonal relation can be accomplished by attaching the magnetic field generating coil 3 to a flat plate having nearly the same circumference as an outer shape of the magnetic field generating coil 3 and arranging a slit vertically extending at the middle position in the width direction of the flat plate with the loop antennas 4A and 4B disposed to the slit.

The detection tag detecting gate device of the second embodiment can exert the same effect as that of the first embodiment.

Fig. 6 is a schematic plan view showing a modification of the second embodiment, and Fig. 6 corresponds to Fig. 5 mentioned above. In case of this modification, the antenna surface of the loop antenna 4A is inclined at an angle θ1 to the coil surface of the magnetic field generating coil 3. The antenna surface of the loop antenna 4B is inclined at an angle θ2 to the coil surface of the magnetic field generating coil 3. The angles θ1 and θ2 can be arbitrary adjusted. That is, directivity for detecting the detection tag can be adjusted.

Other modifications of the second embodiment can include: a mechanism for rotating the whole of the magnetic field generating coil 3 and the loop antennas 4A and 4B at a constant speed by a motor and the like; a mechanism for rotating only the magnetic field generating coil 3 at a constant speed by a motor and the like while the loop antennas 4A and 4B are fixed; a mechanism for rotating the loop antennas 4A and 4B at a constant speed by a motor and the like while the magnetic field generating coil 3 is fixed; a mechanism for rotating the magnetic field generating coil 3 and the loop antennas 4A and 4B at different and constant speeds. Using such mechanisms enlarge directivity.

### (C) Third embodiment

Referring to the accompanying drawings, a third embodiment in which a magnetic object detection device according to the present invention is applied to a detection tag detecting gate device will be described in detail. The third embodiment features a form of the magnetic field generating coil 3.

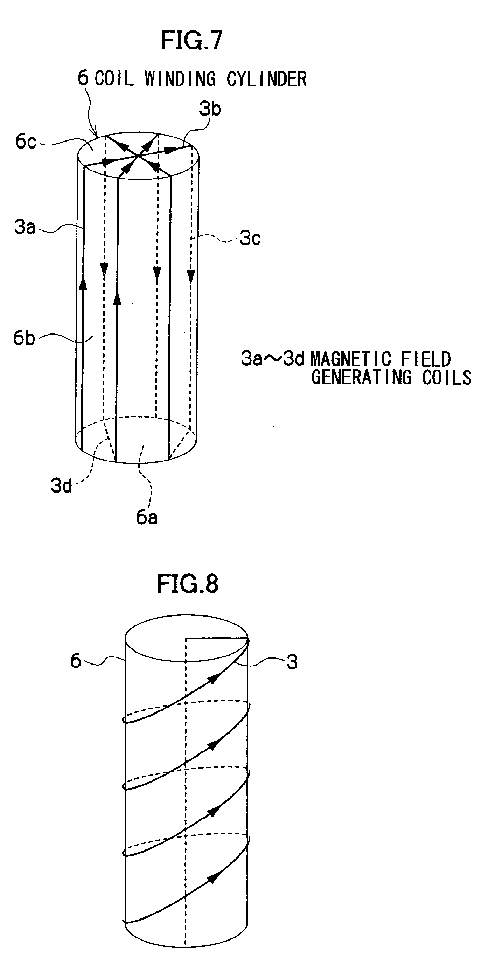

Fig. 7 shows a schematic view of the magnetic field generating coil 3 according to the third embodiment. In Fig. 7, the magnetic field generating coil 3 is wound parallel to an axial direction of a cylindrical-shaped coil winding cylinder 6 at a side surface of the cylinder 6 disposed inside the cylinder 2 (see Fig. 1) . The magnetic field generating coil 3 is wound on the following portions of the coil winding cylinder 6 several times in this order: a portion 3a linearly rising from a bottom plate 6a side of the coil winding cylinder 6 through a side surface 6b to a ceiling plate 6c side; a portion 3b linearly advancing on the ceiling plate 6c; a portion 3c linearly lowering from the ceiling plate 6c through the side surface 6b to the bottom plate 6a side; and a portion 3d linearly advancing on the bottom plate 6a. The rising portion 3a and the lowering portion 3c are disposed on the circumference of the coil winding cylinder 6 at an almost equiangular interval (Fig. 7 shows an interval of 60°). Alternatively, unlike Fig. 7, the rising portion 3a and the lowering portion 3c may be disposed on the circumference of the coil winding cylinder 6 densely and sparsely.

Although not shown in Fig. 7, the two loop antennas 4A and 4B are provided inside the coil winding cylinder 6.

In the above-mentioned first and second embodiments, when the magnetic field generating coil 3 and the loop antennas 4A and 4B are not rotated by a motor and the like, directivity tends to be narrow. In the third embodiment, even when the magnetic field generating coil 3 and the loop antennas 4A and 4B are not rotated, directivity can be enlarged. A modification of the third embodiment also includes the case where the magnetic field generating coil 3 and the loop antennas 4A and 4B are rotated.

In the third embodiment, the effect by forming the detection tag detecting gate device in a pole shape is the same as that of the first embodiment.

### (D) Fourth embodiment

Referring to the accompanying drawings, a fourth embodiment in which a magnetic object detection device according to the present invention is applied to a detection tag detecting gate device will be described in detail. The fourth embodiment features a form of the magnetic field generating coil 3.

Fig. 8 shows a schematic view of the magnetic field generating coil 3 according to the fourth embodiment. In Fig. 8, the magnetic field generating coil 3 of the fourth embodiment is also wound around the cylindrical-shaped coil winding cylinder 6 disposed inside the cylinder 2 (see Fig. 1) . The magnetic field generating coil 3 of the fourth embodiment is spirally wound by gradually rising to the side surface of the coil winding cylinder 6. A return portion from the rising portion is along a central axis of the coil winding cylinder 6. Alternatively, unlike Fig. 8, the spiral wind of magnetic field generating coil 3 may be dense and sparse.

Although not shown in Fig. 8, the two loop antennas 4A and 4B are provided inside the coil winding cylinder 6.

Applying the spiral magnetic field generating coil 3 is easier to detect when a magnetic direction is positioned parallel to the central axis of the coil winding cylinder 6 than when a magnetic direction is positioned orthogonal to the central axis of the coil winding cylinder 6 with respect to the detection tag at equal intervals. That is, the magnetic direction of the detection tag provides a different detecting capability even at the same position.

In the fourth embodiment, the effect by forming the detection tag detecting gate device in a pole shape is the same as that of the first embodiment.

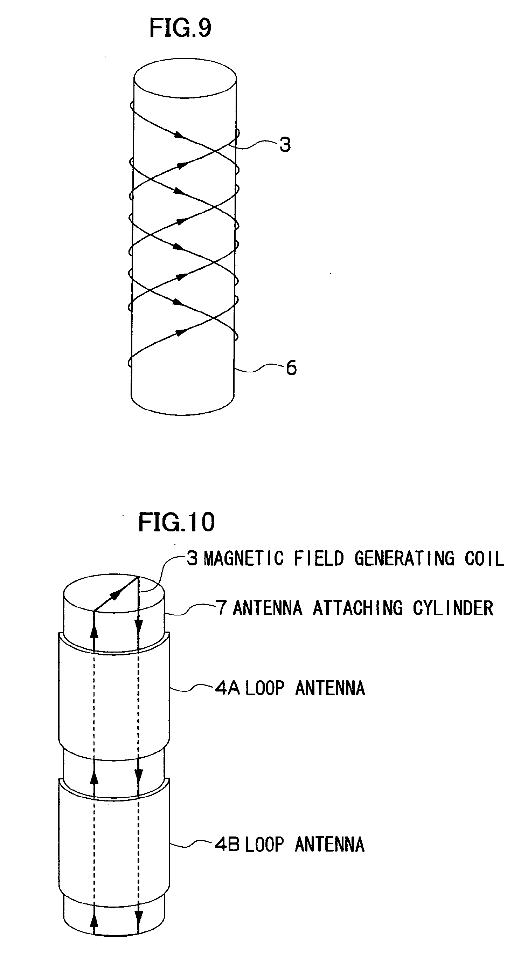

Fig. 9 is a schematic view showing a modification of the magnetic field generating coil according to the fourth embodiment, and Fig 9 corresponds to Fig. 8 mentioned above. In this modification, the magnetic field generating coil 3 is spirally wound by gradually rising to the side surface of the coil winding cylinder 6. A return portion from the rising portion is also spirally wound by gradually lowering to the side surface of the coil winding cylinder 6.

Othermodifications of the fourth embodiment can include one for rotating the magnetic field generating coil 3 and/or the loop antennas 4A and 4B.

### (E) Fifth embodiment

Referring to the accompanying drawings, a fifth embodiment in which a magnetic object detection device according to the present invention is applied to a detection tag detecting gate device will be described in detail.

Fig. 10 is a schematic view showing an essential configuration of the detection tag detecting gate device according to the fifth embodiment. In Fig. 10, the magnetic field generating coil 3 is disposed inside a cylindrical-shaped antenna attaching cylinder 7. On the other hand, each of the loop antennas 4A and 4B is provided outside and on an exterior of the antenna attaching cylinder 7 so as to fit a shape of the side surface of the antenna attaching cylinder 7. Therefore, the antenna surfaces of the loop antennas 4A and 4B can be increased and formed into a curved surface so that improvement of detection accuracy can be expected. Further, each of the loop antennas 4A and 4B can be attached easily.

In the fifth embodiment, the effect by forming the detection tag detecting gate device in a pole shape is the same as that of the first embodiment.

Other modifications of the fifth embodiment can include one for rotating the magnetic field generating coil 3 and/or the loop antennas 4A and 4B.

### (F) Sixth embodiment

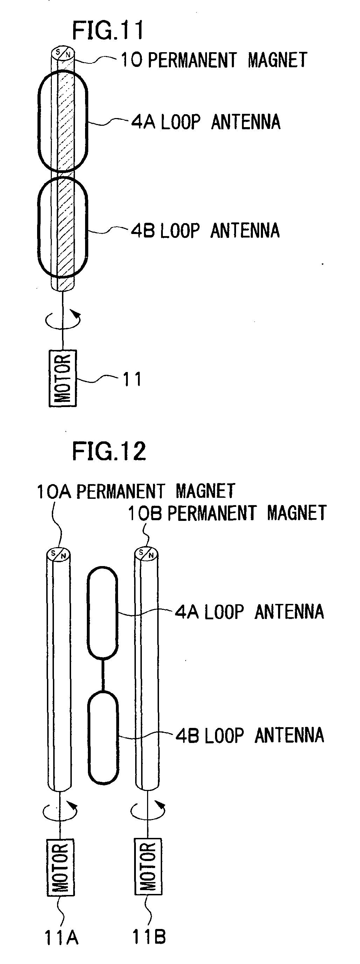

Referring to the accompanying drawings, a sixth embodiment in which a magnetic object detection device according to the present invention is applied to a detection tag detecting gate device will be described in detail. Fig. 11 is a schematic view showing an essential configuration of the detection tag detecting gate device according to the sixth embodiment.

The sixth embodiment features a method for generating a magnetic field radiated to detect the detection tag without using the magnetic field generating coil 3 as the foregoing embodiments. That is, in the sixth embodiment, a bar-shaped permanent magnet 10, which is circumferentially divided into two and magnetized with N and S poles, is arranged adjacent to the two loop antennas 4A and 4B. Rotating the permanent magnet 10 by a motor 11 generates an alternating magnetic field. Besides, the permanent magnet 10 may be arbitrarily divided into four, six, or the like. The permanent magnet 10 may be a cylindrical or flat plate shape, for example.

If an attempt is made to accomplish a thinner pole shape while applying the magnetic field generating coil, a length in the width direction (horizontal direction) of the magnetic field generating coil is shorten. In this condition, in order to generate a sufficiently large alternating magnetic field over a sufficient range, power supply to the magnetic field generating coil increases. When the permanent magnet 10 as shown in the sixth embodiment is utilized to form an approximately same thin pole shape, although power supply to the motor 11 is needed, an energy-saving type detection tag detecting gate device can be obtained less than an amount of electric power to the magnetic field generating coil.

In the sixth embodiment, the effect by forming the detection tag detecting gate device in a pole shape is the same as that of the first embodiment.

### (G) Seventh embodiment

Referring to the accompanying drawings, a seventh embodiment in which a magnetic object detection device is applied to a detection tag detecting gate device will be described in detail. Fig. 12 is a schematic view showing an essential configuration of the detection tag detecting gate device according to the seventh embodiment.

In the seventh embodiment, the two permanent magnets 10A and 10B are sandwiched between and arranged adjacent to the two loop antennas 4A and 4B. The permanent magnets 10A and 10B are rotated by corresponding motors 11A and 11B respectively. In this case, three or more permanent magnets may be employed. The rotation of the two permanent magnets 10A and 10B is performed synchronously under the control of the electric processing section 5 (see Fig. 1), for example.

Utilizing two permanent magnets 10A and 10B can generate a large alternating magnetic field and enlarge a detectable range.

In the seventh embodiment, the effect by forming the detection tag detecting gate device in a pole shape is the same as that of the first embodiment.

Fig. 12 shows an example in which the motors 11A and 11B corresponding to the permanent magnets 10A and 10B are disposed. However, it is also possible to provide one common motor whose rotational force is transmitted to two permanent magnets 10A and 10B by a gear mechanism and the like.

### (H) Other embodiments

While the invention is described in various modifications of embodiments in the explanation of the above-mentioned embodiments, other modifications of the embodiment can be described hereinbelow.

When the coil winding cylinder of the third and fourth embodiments and the antenna attaching cylinder of the fifth embodiment have a configuration capable of realizing the above-mentioned winding and attaching shapes, a complete cylinder is not required. For example, when rigidity of the magnetic field generating coil is enhanced and the above-mentioned shapes can be formed without actually winding around the cylinder, the cylinder itself may not be required. The same is true of the antenna attaching cylinder.

Although the configurations applying the permanent magnet instead of the magnetic field generating coil are illustrated in the sixth and seventh embodiments, the magnetic field generating coil and the permanent magnet can jointly be used.

In the foregoing embodiments, two loop antennas are illustrated, but one or more than three loop antennas may be employed. It is preferable that the detection tag detecting gate device has a plurality of loop antennas and performs differential processing capable of canceling a noise.

The number of the detection tag detecting gate device to be installed for detecting the detection tagmay be arbitrary. When a plurality of the detection tag detecting gate devices are installed, each device need not be the same. For example, it is possible to arrange the detection tag detecting gate device of the different embodiments so as to coexist. Further, the detection tag detecting gate device is not limited to a floor installation type. The detection tag detecting gate device may be suspended from a ceiling and the like.

The above respective embodiments describe the case in which the invention is applied to the detection tag detecting gate device. However, the invention is widely applied to the magnetic object detection device which detects whether or not a magnetic object exists in a vicinity.

## Claims

1. A magnetic object detection device, comprising:
magnetic field generating means for radiating an alternating magnetic field in a vicinity space;
one or a plurality of loop antennas which convert the magnetic field in the vicinity space into an electric signal;
determining means for analyzing an existence of magnetostriction and determining an existence of a magnetic obj ect, the magnetostriction generated by the magnetic obj ect existing in the vicinity space based on the electric signal of each of the loop antennas,
wherein an installation member, attached with at least the magnetic field generating means and each of the loop antennas, has a pole shape.

2. The magnetic object detection device according to claim 1, wherein the magnetic field generating means radiates the alternating magnetic field by flowing a current to a magnetic field generating coil.

3. The magnetic object detection device according to claim 2, wherein a coil surface of the magnetic field generating coil and an antenna surface of each of the loop antennas are disposed on the same plane.

4. The magnetic object detection device according to claim 2, wherein the coil surface of the magnetic field generating coil is crossed to the antenna surface of each of the loop antennas, and the crossing straight line is parallel with a longitudinal axial direction of the installation member.

5. The magnetic object detection device according to claim 2, wherein the magnetic field generating coil is wound around a coil winding cylinder.

6. The magnetic object detection device according to claim 5, wherein the magnetic field generating coil is wound parallel to an axial direction of the coil winding cylinder at a side surface of the coil winding cylinder.

7. The magnetic object detection device according to claim 5, wherein the magnetic field generating coil has a portion spirally wound to a side surface of the coil winding cylinder.

8. The magnetic object detection device according to claim 1, wherein each of the loop antennas is attached such that a shape of the antenna surface fits a shape of a side surface of an attaching cylinder.

9. The magnetic object detection device according to claim 1, wherein the magnetic field generating means radiates the alternating magnetic field by rotating a permanent magnet.

10. The magnetic object detection device according to claim 1, wherein the plurality of loop antennas are provided, the determining means obtains a difference signal of an electric signal from the loop antennas, and determines the existence of the magnetic object based on the difference signal.

11. The magnetic object detection device according to claim 1, wherein the magnetic object determined by the determining means is a magnetic tag.
